# EUROPÄISCHE PATENTSCHRIFT

(11) **EP 2 136 951 B1**
(45) Veröffentlichungstag und Bekanntmachung des Hinweises auf die Patenterteilung: **09.03.2011**
(21) Anmeldenummer: 08706785.6
(22) Anmeldetag: 22.01.2008
(51) Int. Cl.: B23C 5/00, B23C 5/08, B23D 43/06, B23D 37/00

(54) **WERKZEUG**
TOOL
OUTIL

(30) Priorität: 20.03.2007 DE 102007013153
(43) Veröffentlichungstag der Anmeldung: 30.12.2009
(73) Patentinhaber: KENNAMETAL INC., Latrobe, PA 15650-0231 (US)
(72) Erfinder: HEINLOTH, Markus, 92353 Postbauer-Heng (DE); WÖRNER, Johann, 90556 Egersdorf (DE); THURNWALD, Walter, 90547 Stein (DE)
(74) Vertreter: Vomberg, Friedhelm
(86) Internationale Anmeldenummer: PCT/DE2008/000110
(87) Internationale Veröffentlichungsnummer: WO 2008/113311

(56) Entgegenhaltungen:
- WO-A-88/08765
- DE-A1- 19 963 328
- GB-A- 2 028 200
- US-A1- 2005 129 475

## Beschreibung

Die Erfindung betrifft ein Werkzeug zum Außenfräsen oder zum Dreh-Drehräumen von Werkstücken, die bei der zerspanenden Bearbeitung um ihre Längsachse rotieren, mit einem scheibenförmigen Werkzeugträger, der peripher angeordnete Schneideinsätze oder mit Schneideinsätzen bestückte Kassetten aufweist, wobei die Schneideinsätze (15) oder die Kassetten (28) auf einem ringförmigen oder teilringförmigen, segmentförmigen, lösbar entweder unmittelbar an einer Maschinenspindel (10) oder mittelbar über einen Adapter (23) an einer Maschinenspindel (10) befestigten Träger (11, 21) angeordnet sind. Ein solches Werkzeug ist aus der WO 88/08765 bekannt.

Solche Werkzeuge werden insbesondere für die Herstellung von Kurbel- oder Nockenwellen von Kraftfahrzeugen zur Fertigung sowohl zentrischer als auch exzentrischer zu einer Werkstücklängsachse liegende rotationssymmetrische Flächen verwendet. Bei der Herstellung solcher Wellen geht man vielfach von einem Werkstück aus, das mit einem gewissen Aufmass gegossen worden ist, um die anschließenden Zerspanungsoperationen zur Fertigung der Haupt- und Hublager mit ausreichender Sicherheit durchführen zu können. Aus dem Stand der Technik sind Werkzeuge zum Drehräumen oder Dreh-Drehräumen oder Außenfräsen bekannt.

Beim Drehräumen wird ein lineares Drehräum-Werkzeug in radialer Richtung auf das zu bearbeitende rotierende Werkzeug zugestellt. Beim Dreh-Drehräumen sind auf einem Teilkreisumfang eines scheibenförmigen Werkzeugträgers mehrere aufeinander folgende Schneideinsätze angeordnet, die schrittweise kontinuierlich längs einem ersten Abschnitt des Scheibenumfanges zunehmen. Dieses Werkzeug wird entlang eines Teilkreisbogens in radialer Richtung auf das rotierend bewegte Werkstück eingeschwenkt, wie dies prinzipiell aus der EP 0 313 644 B1 oder der EP 0 286 771 A1 bekannt ist. Auf den dort zum Einsatz kommenden Werkzeugen werden zwei geometrisch unterschiedliche Schneideinsatztypen für die Zapfenbearbeitung und die Fertigung des Unterstichs verwendet, wozu Werkzeuge beispielsweise in der DE 100 279 45 A1 dargestellt und beschrieben. Ein solcher Scheibenfräser wird beim Außenfräsen derart eingesetzt, dass das Werkstück, nämlich die Kurbel- oder Nockenwelle langsam rotiert, wohingegen der Scheibenfräser mit wesentlich höherer Geschwindigkeit um seine Achse gedreht wird. Beim Außenfräsen, das insbesondere zur Fertigung der Hublage einer Kurbelwelle eingesetzt wird, resultiert die Schnittgeschwindigkeit somit aus der Drehung des Außenfräsers und der langsameren Drehung der Kurbelwelle.

Ein weiteres Werkzeug wird durch die DE 19963328A1 offenbart, welches einen Schlitzfräser betrifft, der aus zwei Teilen besteht, nämlich einem mittleren Anpassstück und einem Schneidenteil, die getrennt hergestellt und über ein Wärmeschrumpfungsverfahren miteinander verbunden werden.

Ferner ist aus der WO 88/08765 ein Werkzeug mit einer Scheibe aus mehreren Scheibensegmenten bekannt, die starr jedoch abnehmbar auf einer Scheibennabe angeordnet sind, wobei die Anordnung in Bezug auf die Nabe durch Eingriff einer Nabenpassfeder an der Nabe und an jedem Segment festgelegt wird. Nabe sowie Scheibensegment besitzen miteinander fluchtende Gewindebohrungen, die eine Befestigungsschraube aufnehmen.

Darüber hinaus ist in der GB 2028200 A ein mehrteiliger Fräser mit einer Aufspannplatte beschrieben, auf der ein Fräsring montiert ist. Die Aufspannplatte weist einen zentralen Vorsprung auf, der durch eine zentrale Öffnung des Fräsrings greift, wobei der Fräsring und die Aufspannplatte durch Schrauben miteinander Verbunden werden.

Schließlich beschreibt die US 2005/0129475 A1 einen Stirnfräser, der eine Stirnplatte mit mehreren Werkzeugen zeigt, die auf einer Antriebswelle befestigt ist.

Die Wirtschaftlichkeit der Fräsbearbeitung hängt von verschiedenen Faktoren ab, zu denen insbesondere die Umrüstzeiten der Werkzeuge gehören. Sind die Schneideinsätze auf einem Werkzeugträger verschlissen, müssen diese Schneideinsätze ausgetauscht werden, wobei es nach dem Stand der Technik erforderlich ist, an einem Scheibenfräser entweder jeden einzelnen Schneideinsatz zu lösen, durch einen neuen zu ersetzen und diesen zu verspannen oder jeweils Kassetten mit einem oder mehreren Schneideinsätzen auszutauschen, wozu zuvor ebenfalls ein Lösen der Kassette sowie ein erneutes Befestigen erforderlich ist. Während solcher Umrüstzeiten ruht die Fräsbearbeitung, es sei denn, dass aus der Fräsmaschine ein kompletter Scheibenfräser ausgebaut und durch einen bereitgestellten Scheibenfräser ersetzt wird.

Es ist Aufgabe der vorliegenden Erfindung, die Umrüstzeiten zu minimieren und die Handhabung bei Umrüsten zu vereinfachen.

Diese Aufgabe wird durch ein Werkzeug nach Anspruch 1 gelöst, das erfindungsgemäß dadurch gekennzeichnet ist, dass die Träger im Querschnitt L-förmig ausgebildet sind, wobei an deren einer Seite eine offene schlitzförmige Ausnehmung zur Durchführung eines Schraubenschaftes ausgebildet ist und an deren anderer Seite ein Anschlag vorgesehen ist.

Der ringförmige oder segmentförmige Träger lässt sich bei weitem schneller Demontieren bzw. Montieren, so dass längere Umrüstzeiten vermieden werden. Der ringförmige oder segmentförmige Träger, der mit mehreren Schneideinsätzen bestückt ist, ist auch als Werkzeughalter preiswert zu fertigen, so dass zusätzliche Materialkosten nur marginal sind. Werden segmentförmige Träger verwendet, so bilden mehrere aneinander gesetzte Segmente den komplette peripheren Ring von Schneideinsätzen oder bei leistenförmigen Werkzeugen zum Dreh- oder Dreh-Drehräumen den benötigten kompletten Träger.

Anders als die Befestigungsschrauben für die Schneideinsätze können Klemm- oder Schraubkörper, mit denen der Träger an einem Adapter oder unmittelbar an der Maschinenspindel befestigt wird, so angeordnet werden, dass sie in einer Ausnehmung, geschützt vor Verschmutzung oder abrasiven Einflüssen oder einer Schlagbeanspruchung, liegen. Die Anzahl der Befestigungsmittel für den jeweiligen Werkzeugträger wird möglichst minimal gewählt.

Wählt man segmentförmige Träger, die bei einem Außenfräser einen kompletten Ring ergeben, wird ein Segmentwinkel gewählt, der einerseits möglichst groß ist, so dass nur eine geringe Anzahl von einzelnen Trägern gewechselt werden muss, andererseits soll das Gewicht so bemessen sein, dass ein Wechsel per Hand ohne weitere Hubmittel ohne Schwierigkeiten möglich ist. Das Gewicht eines einzelnen Segmentes lässt sich so beschränken, z. B. auf 10 bis 12 kg. Der Vorteil einer solchen Ausgestaltung besteht darin, dass ein ansonsten notwendiger Beladekran für den Wechsel einer kompletten Außenfräserscheibe eingespart werden kann.

Zudem ist es vorteilhaft, dass der segmentartige Träger von einer Seite her bei vormontierten Schrauben oder Klemmkeilen auf den Adapter bis zum Anschlag geschoben werden kann, so dass eine eindeutige Lagefixierung gegeben ist. Zur Befestigung des L-förmigen Trägers werden die Schrauben oder Klemmkeile angezogen. Dies ist besonders für einen schnellen Werkzeugwechsel geeignet, da die Schrauben oder Klemmkeile nur über einen geringen Bereich angezogen werden müssen.

Weitere vorzugsweise Ausgestaltungen ergeben sich aus den Unteransprüchen.

Bei der Problemlösung mittels einzelner Segmente ist vorzugsweise vorgesehen, dass jeder segmentförmige Träger mittels jeweils mindestens einer Schraube, vorzugsweise zwei oder drei Schrauben, an der Maschinenspindel befestigt ist. Die Anzahl der Schraubverbindungen hängt jedoch im Wesentlichen von der Größe des Trägers ab; so wird selbstverständlich ein Träger, der einen Winkelbereich von 45° umfasst, vorzugsweise mit drei Schrauben befestigt, wohingegen ein kleineres Winkelsegment lediglich zwei Schrauben benötigt. Die einzelnen Segmente, die zusammen einen geschlossenen Kreisring bilden sollen, liegen mit ihren jeweiligen Stirnflächen, die sich in radialer Richtung erstrecken, an der jeweils benachbarten Stirnfläche eines weiteren Trägers an.

Vorzugsweise durchgreift jede Schraube eine im Träger angeordnete Bohrung und ist in einer Gewindebohrung der Maschinenspindel befestigt.

Die Befestigung ist allerdings auch umgekehrt denkbar, nämlich dass der Gewindeschaft der Schraube in einer Gewindebohrung des Trägers eingeschraubt ist und die Schraube eine im Schaft angeordnete Bohrung durchgreift. Vorzugsweise weisen die Schrauben einen Kopf auf, der in montiertem Zustand in einer Ausnehmung des Trägers oder der Maschinenspindel (je nach Anordnung) versenkbar ist.

Will man vermeiden, dass jede Befestigungsschraube beim Wechsel eines Trägers vollständig herausgeschraubt werden muss, um den Träger entnehmen zu können, kann in einer alternativen Ausführungsform vorgesehen werden, dass der segmentförmige Träger an einer Seite offene schlitzförmige Ausnehmungen und am anderen Ende einen Anschlag zum seitlichen Einführen eines Schraubenschaftes vor dem Fixieren mittels der Schrauben aufweist.

Bei dieser Ausführungsform muss die Schraube durch Drehbetätigung des Kopfes lediglich gelöst werden, wonach der Träger aufgrund der schlitzförmigen Öffnung seitlich herausgeführt und durch einen neuen Träger ersetzt werden kann.

Bei Wahl eines Trägers in Form einer Ringscheibe bietet sich zunächst dieselbe Befestigung mittels Schrauben an, die zuvor auch für einzelne Segmente beschrieben ist. Nach einer Alternative wird jedoch bevorzugt der Träger als ringförmige Scheibe in axialer Richtung gegen einen Adapter oder einer Maschinenspindel verspannt, wozu vorzugsweise mittels einer Spannschraube betätigbare Klemmkeile und/oder zur Drehsicherung Federn, die in jeweils nutförmigen Ausnehmungen der miteinander zu verspannenden Teile anliegen, vorgesehen sind. Zwischen dem Träger und dem Adapter oder der Maschinespindel kann jedoch auch eine Bajonettverbindung gewählt werden, wobei vorzugsweise zwischen dem Träger und dem Adapter oder der Maschinenspindel eine Keilklemmung verwendet wird, insbesondere dergestalt, dass der Klemmkeil mittels einer Zugstange betätigbar ist. Vorzugsweise wird die Ringscheibe mittels einer axialen Anlagefläche gegen Axialverschiebungen gesichert.

Ausführungsbeispiele der Erfindung sind den Zeichnungen beschrieben. Es zeigen:
- Fig. 1-5: jeweils eine Teilansicht eines Scheibenfräsers mit segmentförmigen Werk- zeugträgern in unterschiedlichen Ausführungsformen,
- Fig. 6: einen Scheibenfräser mit einem ringförmigen Werkzeugträger und
- Fig.7+8: jeweils Varianten der Befestigung eines ringförmigen Werkzeugträgers in eine Detailansicht.

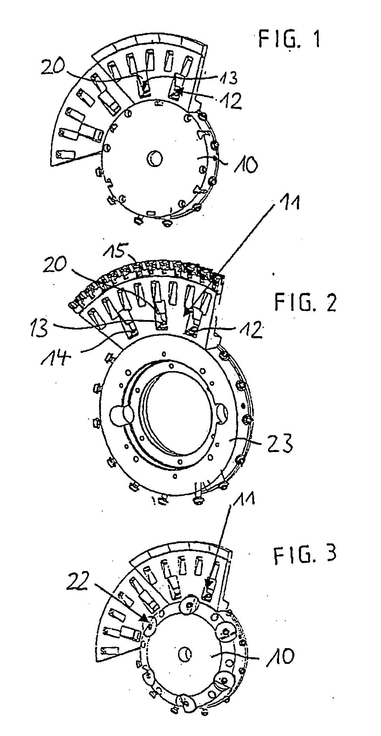

Jeweils einheitlich in den Zeichnungen ist die vorhandene Spindel 10, an der entweder unmittelbar der Werkzeugträger oder ein Adapter befestigt ist. Der Träger kann entweder segmentförmig oder ringförmig ausgebildet sein. Bei der in Fig. 1 bis 5 dargestellten Ausführungsvariante sind Segmente 11 verwendet worden, wobei jedes Segment 11 mit zwei oder drei Schrauben 12, 13 und 14 an der Spindel 10 befestigt ist. In dem in Fig. 1 dargestellten Fall werden zehn Segmente 11 benötigt, die insgesamt einen geschlossenen Ring bilden, an dem peripher Kassetten 28 mit jeweils mehreren unterschiedlichen Schneideinsätzen 15 befestigt sind. Die Befestigung und Anordnung der einzelnen Kassetten sowie der Wendeschneidplatten ist im Einzelnen aus dem Stand der Technik bekannt. Jedes Segment besitzt zwei Ausnehmungen 16, 17, in die die Befestigungsschrauben derart einführbar sind, dass der Schraubenkopf einer vorzugsweise verwendeten Imbussschraube im Bereich dieser Ausnehmungen 16 bzw. 17 "versenkt" ist. Der Kopf liegt unter einem Spanndruck auf der jeweiligen Basisfläche der Ausnehmung 16, 17 an, wobei der Schraubenschaft eine nicht im einzelnen sichtbare Bohrung des segmentförmigen Trägers 11 durchgreift und die Schraube mit ihrem Gewinde im übrigen in einer Gewindebohrung in der Spindel 10 oder einem Adapter befestigt ist.

Für eine Fräserscheibe mit einem Außendurchmesser von 700 mm werden bei zehn Segmenten 11, die in der dargestellten Ausführungsform eine Masse von 3,4 kg besitzen, zwanzig Schrauben benötigt. Die Ausnehmungen 16, 17 können lediglich von einer Seite oder auch von beiden Seiten her zugänglich sein.

Auch in der in Fig. 2 dargestellten Ausführungsform werden einzelne Segmente 11 verwendet, die jedoch dort an einem Adapter 23 befestigt werden. Zusätzlich erkennbar ist noch, dass jeweils drei Spannschrauben zur Befestigung eines Segmentes 11 dienen. Die Spannschrauben 19 befinden sich jeweils in Ausnehmungen 20, so dass die Schraubenköpfe geschützt sind.

Fig. 3 zeigt eine Ausführungsvariante, bei der die einzelnen Segmente 11 noch über zusätzliche Klemmpunkte 22 axial fixiert werden. Die Klemmpunkte 22 werden durch ein keilförmiges Klemmorgan gebildet, durch welches jedes Segment längsaxial fixiert wird. Die im Querschnitt L-förmigen Segmente werden auf der gegenüberliegenden Seite der Klemmpunkte 22 durch eine sich radial über den Rand der Spindel 10 erstreckende Scheibe gegen Axialverschiebung gesichert.

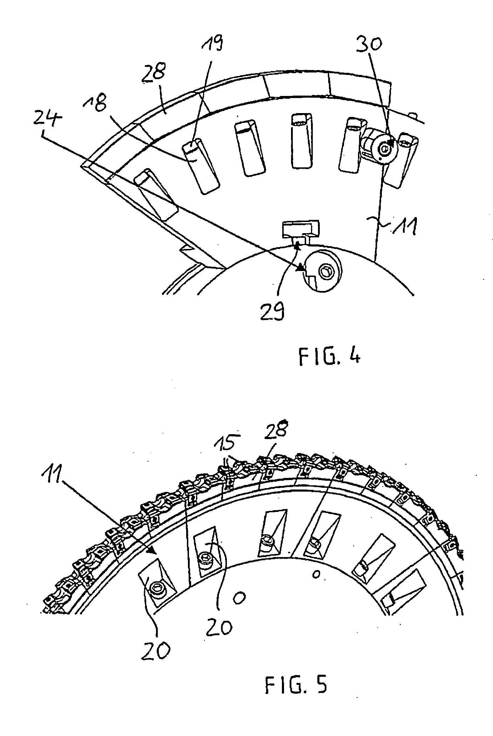

Fig. 4 zeigt ein Segment 11, das eine an einer Seite offene schlitzförmige Ausnehmung 29 aufweist, die jedoch blind endet und an ihrem Ende einen Anschlagpunkt für einen Schraubenschaft liefert. Für die axiale Verspannung sorgen auch hier Klemmkeile 24. Die einzelnen Segmente 11 können durch Klemmstücke 30 zu einem kompletten Ring aneinander fixiert werden. Wie Fig. 4 zu entnehmen ist, sind weitere Ausnehmungen 18 vorgesehen, die zur Aufnahme jeweiliger Spannschrauben 19 dienen, mit der Kassetten 28, die in Fig. 4 nur angedeutet sind, jeweils verschraubt werden. Die Kassetten dienen zur Aufnahme von einzelnen Schneideinsätzen, was beispielsweise Fig. 5 zu entnehmen ist.

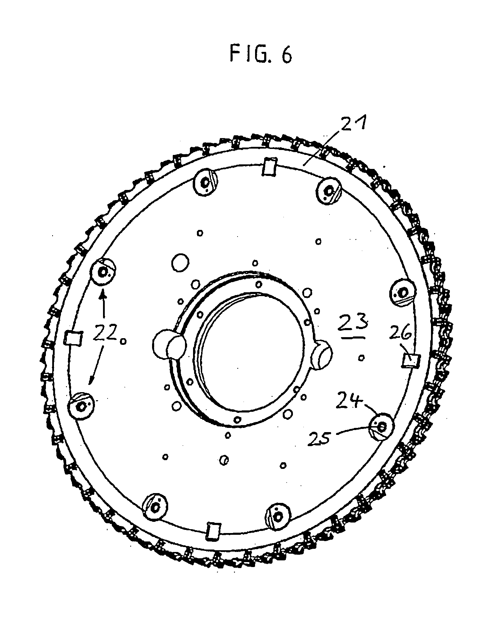

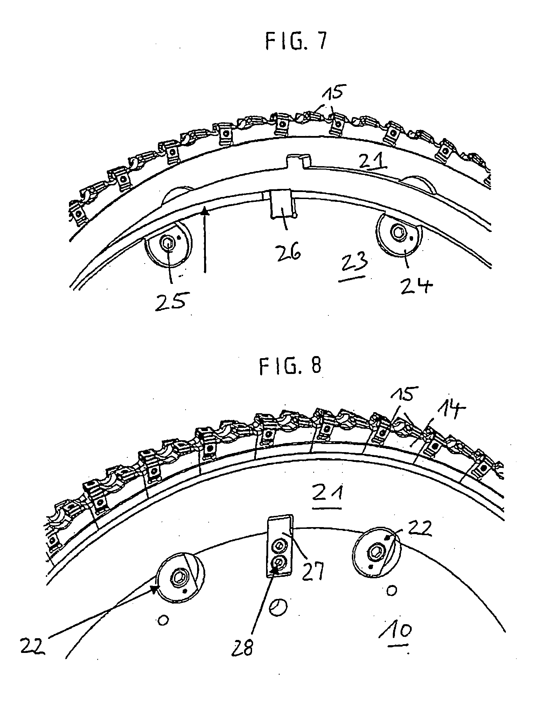

Fig. 6 und 7 zeigen eine Ausführungsform mit einem geschlossenen ringförmigen Träger 21, der über acht Klemmpunkte 22 an einem scheibenförmigen Adapter 23 befestigt ist. Zur Klemmung dienen Klemmkeile 24, die in Verbindung mit einer Spannschraube 25, welche eine mittlere Bohrung durchgreift, ein Klemmorgan bilden, durch welches der Ring 21 an dem Adapter 23 fixiert wird. Federn 26, die sowohl in Ausnehmungen in dem Adapter als auch in den Ring 21 eingreifen, dienen zur Festlegung der Drehorientierung der genannten Teile zueinander.

Im vorliegenden Fall müssen zum Wechsel des Ringes 21 die Schrauben 25 gelöst werden, wonach die Ringscheiben derart ausgerichtet werden können, dass der Ring 21 freigelegt wird und entnommen werden kann. Bedingt durch die geringe Höhe des Ringes 21 kann bei einem Fräserdurchmesser von 700 mm ein Gewicht von ca. 15 kg für den Ring 21 eingehalten werden, der über insgesamt acht Klemmpunkte 22 befestigt und manuell handhabbar ist.

Fig. 8 zeigt einen Ring 21 als Träger für die Kassetten 28. Der Ring 21 wird über mehrere Klemmpunkte 22 in der vorbeschriebenen Art an der Spindel 10 festgeklemmt. Zur Ausrichtung des Ringes 21 wird hier eine Feder 27 verwendet, die über zwei Schrauben 28 an der Spindel 10 fixiert ist.

Alle dargestellten Träger 11 oder 21 können im Querschnitt L-förmig mit einer an einer Seite offenen schlitzförmigen Ausnehmungen 29 zur Durchführung eines Schraubenschaftes ausgebildet sein. An der anderen Seite ist vorzugsweise ein Anschlag vorgesehen. Der Vorteil dieser Ausführungsform liegt darin, dass der segmentartige Träger 28 von einer Seite her bei vormontierten Schrauben 12, 13 oder 14 oder Klemmkeilen 24 auf den Adapter 23 bis zum Anschlag geschoben werden kann, so dass eine eindeutige Lagefixierung gegeben ist. Zur Befestigung des L-förmigen Trägers 11, 21 werden die Schrauben oder Klemmkeile angezogen. Diese Variante ist besonders für einen schnellen Werkzeugwechsel geeignet, da die Schrauben oder Klemmkeile nur über einen geringen Bereich angezogen werden müssen.

### Bezugzeichenliste

- 10: Spindel
- 11: Segment
- 12, 13, 14: Schraube
- 15: Schneideinsatz
- 16, 17: Ausnehmung
- 18: Ausnehmung
- 19: Spannschraube
- 20: Ausnehmung
- 21: ringförmiger Träger
- 22: Klemmpunkte
- 23: Adapter
- 24: Klemmkeil
- 25: Schraube
- 26, 27: Feder
- 28: Kassette
- 29: Nut
- 30: Klemmstücke

## Patentansprüche

1. Werkzeug zum Außenfräsen oder zum Dreh-Drehräumen von Werkstücken, die bei der zerspanenden Bearbeitung um ihre Längsachse rotieren, mit einem scheibenförmigen Werkzeugträger, der peripher angeordnete Schneideinsätze (15) oder mit Schneideinsätzen (15) bestückte Kassetten (28) aufweist, wobei die Schneideinsätze (15) oder die Kassetten (28) auf einem ringförmigen oder teilringförmigen, segmentförmigen, lösbar entweder unmittelbar an einer Maschinenspindel (10) oder mittelbar über einen Adapter (23) an einer Maschinenspindel (10) befestigten Träger (11, 21) angeordnet sind
**dadurch gekennzeichnet, dass**
die Träger (11, 21) im Querschnitt L-förmig ausgebildet sind, wobei an deren einer Seite eine offene schlitzförmige Ausnehmung (29) zur Durchführung eines Schraubenschaftes ausgebildet ist und an deren anderer Seite ein Anschlag vorgesehen ist.

2. Werkzeug nach Anspruch 1, **dadurch gekennzeichnet, dass** der segmentförmige Träger (11) mittels jeweils mindestens einer Schraube, vorzugsweise zwei oder drei Schrauben (12, 13, 14) an der Maschinenspindel (10) oder einem Adapter (23) befestigt ist.

3. Werkzeug nach Anspruch 2, **dadurch gekennzeichnet, dass** die Schrauben (12, 13, 14) jeweils eine im Träger (11) angeordnete Bohrung durchgreifen und in einer Gewindebohrung der Maschinenspindel (10) (oder umgekehrt) befestigt sind.

4. Werkzeug nach Anspruch 3, **dadurch gekennzeichnet, dass** die Schrauben (12, 13, 14) einen Kopf aufweisen, der in montiertem Zustand in einer Ausnehmung (16, 17) des Trägers oder der Maschinenspindel (10) versenkbar angeordnet ist.

5. Werkzeug nach einem der Ansprüche 2 bis 4, **dadurch gekennzeichnet, dass** der segmentförmige Träger an einer Seite offene schlitzförmige Ausnehmungen und einen Anschlag am anderen Ende zum seitlichen Einführen eines Schraubenschaftes vor dem Fixieren mittels der Schrauben (12, 13, 14) aufweist.

6. Werkzeug nach Anspruch 1, **dadurch gekennzeichnet, dass** der Träger (21) zumindest im wesentlichen ringscheibenförmig ausgebildet ist und in axialer Richtung gegen einen Adapter oder eine Maschinenspindel verspannbar ist.

7. Werkzeug nach Anspruch 6, **dadurch gekennzeichnet dass** als Klemmkörper Klemmkeile (24) vorgesehen sind, die über eine Spannschraube (25) betätigbar sind.

8. Werkzeug nach Anspruch 6 oder 7, **dadurch gekennzeichnet, dass** zur Drehsicherung Federn (26, 27) vorgesehen sind, die in nutförmige Ausnehmungen der Ringscheibe (21) und des Adapters (23) oder der Maschinenspindel (10) eingreifen.

9. Werkzeug nach einem der Ansprüche 1 bis 8, **gekennzeichnet durch** eine Bajonetteverbindung zwischen dem Träger (11, 21) und einem Adapter (23) oder der Maschinenspindel (10).

10. Werkzeug nach einem der Ansprüche 1 bis 9, **gekennzeichnet durch** eine Keilklemmung (22) zwischen dem Träger (11, 21) und dem Adapter (23) oder der Maschinenspindel (10), vorzugsweise einem mittels einer Zugstange betätigbaren Klemmkeil.

## Claims

1. Tool for the external milling or turn-turn-broaching of workpieces rotating about their longitudinal axis during the machining, comprising a disk-shaped tool holder having peripheral cutting inserts (15) or cassettes (28) fitted with cutting inserts (15), whereby the cutting inserts (15) or the cassettes (28) are mounted on an annular or partially ring-shaped, segmental holder (11, 21) detachably fastened either directly to a machine spindle (10) or indirectly to a machine spindle (10) via an adapter (23).
**characterized in that**
the holders (11, 21) have a cross-sectional L-shape, whereby at one side an open slot-shaped recess is provided for passing a screw shank and at the other side a stop.

2. Tool according to claim 1, **characterized in that** the segmental holder (11) is fastened to the machine spindle (10) or to an adapter (23) by means of at least one respective screw, preferably two or three screws (12, 13, 14).

3. Tool according to claim 2, **characterized in that** the screws (12, 13, 14) each pass through respective holes formed in the holder (11) and are seated in respective tapped holes of the machine spindle (10) (or vice versa).

4. Tool according to claim 3, **characterized in that** the screws (12, 13, 14) have a head mounted in a concealable manner in a recess (16, 17) of the holder or of the machine spindle (10) in the fitted state.

5. Tool according to one of the claims 2 to 4, **characterized in that** the segmental holder has slot-shaped recesses open at one end and a stop at the other end for the lateral insertion of a screw shank before fixing by means of the screws (12, 13, 14).

6. Tool according to claim 1, **characterized in that** the holder (21) is at least substantially an annular disk and can be restrained axially against an adapter or a machine spindle.

7. Tool according to claim 6, **characterized in that** the clamping bodies are clamping wedges (24) that can be actuated via respective tightening screws (25).

8. Tool according to claim 6 or 7, **characterized in that** springs (26, 27) are provided for the angular locking, said springs (26, 27) engaging in groove-shaped notches of the annular disk (21) and of the adapter (23) or of the machine spindle (10).

9. Tool according to one of the claims 1 to 8, **characterized by** a bayonet connection between the holder (11, 21) and an adapter (23) or the machine spindle (10).

10. Tool according to one of the claims 1 to 9, **characterized by** wedge clamping (22) between the holder (11, 21) and the adapter (23) or the machine spindle (10), preferably a clamping wedge actuatable by a draw rod.

## Revendications

1. Outil de fraisage extérieur ou de tournage-brochage par tournage de pièces qui, lors de l'usinage par enlèvement de copeaux, tournent autour de leur axe longitudinal, comprenant un porte-outil en forme de disque qui présente des inserts de coupe (15) périphériques ou des cassettes périphériques (28) équipées d'inserts de coupe (15), lesdits inserts de coupe (15) ou lesdites cassettes (28) étant disposé(e)s sur un support (11, 21) annulaire ou partiellement annulaire, en forme de segment, qui est fixé de manière amovible soit directement sur une broche de machine (10) soit indirectement, via un adaptateur (23), sur une broche de machine (10), **caractérisé par le fait que** les supports (11, 21) présentent, en coupe transversale, une forme de L, sur l'un des côtés de ceux-ci étant réalisé un évidement ouvert (29) en forme de fente pour faire passer une tige de vis et sur l'autre côté de ceux-ci étant prévue une butée.

2. Outil selon la revendication 1, **caractérisé par le fait que** le support en forme de segment (11) est fixé respectivement par le biais d'au moins une vis, de préférence deux ou trois vis (12, 13, 14) sur ladite broche de machine (10) ou sur un adaptateur (23).

3. Outil selon la revendication 2, **caractérisé par le fait que** lesdites vis (12, 13, 14) traversent chacune un perçage pratiqué dans ledit support (11) et sont fixées dans un trou taraudé de ladite broche de machine (10) (ou vice versa).

4. Outil selon la revendication 3, **caractérisé par le fait que** lesdites vis (12, 13, 14) présentent une tête qui, en état monté, est disposée de manière à pouvoir être noyée dans un évidement (16, 17) du support ou de la broche de machine (10).

5. Outil selon l'une quelconque des revendications 2 à 4, **caractérisé par le fait que** le support en forme de segment présente des évidements en forme de fente ouverts sur un côté et une butée à l'autre extrémité pour l'introduction latérale d'une tige de vis avant la fixation au moyen des vis (12, 13, 14).

6. Outil selon la revendication 1, **caractérisé par le fait que** ledit support (21) est réalisé au moins pour l'essentiel en forme de disque annulaire et est apte à être serré dans la direction axiale contre un adaptateur ou une broche de machine.

7. Outil selon la revendication 6, **caractérisé par le fait que**, en tant que corps de serrage, on prévoit des cales de serrage (24) qui peuvent être actionnées par l'intermédiaire d'une vis de serrage (25).

8. Outil selon la revendication 6 ou 7, **caractérisé par le fait que**, pour l'immobilisation en rotation, on prévoit des ressorts (26, 27) qui s'engagent dans des évidements en forme de rainure du disque annulaire (21) et de l'adaptateur (23) ou de la broche de machine (10).

9. Outil selon l'une quelconque des revendications 1 à 8, **caractérisé par** une liaison à baïonnette entre le support (11, 21) et un adaptateur (23) ou la broche de machine (10).

10. Outil selon l'une quelconque des revendications 1 à 9, **caractérisé par** un serrage par cale (22) entre ledit support (11, 21) et ledit adaptateur (23) ou ladite broche de machine (10), de préférence une cale de serrage manoeuvrable au moyen d'une tige de traction.
